# EUROPÄISCHE PATENTANMELDUNG

(11) **EP 3 252 324 A1**
(43) Veröffentlichungstag der Anmeldung: **06.12.2017**
(21) Anmeldenummer: 16172834.0
(22) Anmeldetag: 03.06.2016
(51) Int. Cl.: F16B 41/00, E05B 47/00

(54) **ZUGANGSSPERRE ZUM AUFSETZEN AUF EIN ELEMENT ZUM BEFESTIGEN ODER VERRIEGELN**

(71) Anmelder: Techno-Consult GmbH & Co. KG, 83334 Inzell (DE)
(72) Erfinder: Wallner, Manfred, 83334 Inzell (DE)
(74) Vertreter: Naessens, Stephan

(57) **Zusammenfassung**

Es wird eine Zugangssperre zum Aufsetzen auf ein Element (2, 2A, 2B) zum Befestigen oder Verriegeln mit einem magnetisch verriegelbaren und magnetisch entriegelbaren Sperrkörper (1) zum Aufsetzen auf das Element (2, 2A, 2B) vorgeschlagen, wobei eine Drehbewegung des Sperrkörpers (1) durch zumindest einen bewegbaren Sperrmagneten (3) sperrbar und freigebbar ist, wobei der Sperrkörper (1) in einer Verriegelungsposition des Sperrmagneten (3) formschlüssig mit dem Element (2, 2A, 2B) verbunden ist und in einer Entriegelungsposition von dem Element (2, 2A, 2B) entfernbar ist, wobei der Sperrkörper (1) zumindest abschnittsweise mit magnetisierbarem Material zum Beeinflussen der magnetischen Feldlinien des schwimmend gelagerten Sperrmagneten (3) versehen ist, sodass der Sperrmagnet (3) in der Verriegelungsposition haltbar ist und wobei ein Betätigungselement (4) mit zumindest einem mit dem zugeordneten Sperrmagneten (3) korrespondierenden Betätigungsmagnet (3A) zum Entriegeln des Sperrkörpers (1) vorgesehen ist.

## Beschreibung

Die vorliegende Erfindung betrifft eine Zugangssperre zum Aufsetzen auf ein Element zum Befestigen oder Verriegeln gemäß der im Oberbegriff des Patentanspruches 1 näher definierten Art.

Es ist bekannt, Felgen von Kraftfahrzeugen mit Diebstahlsicherungen zu versehen. Häufig werden Radschrauben zum Befestigen der Felgen an der Radnabe des Fahrzeuges mit formschlüssigen Kodierungen an dem Radschraubenkopf als Felgenschloss versehen, so dass die Radschraube nicht ohne speziell gestalteten Radschlüssel lösbar ist. Hierbei hat sich jedoch gezeigt, dass durch frei erhältliche Dekodierschlüssel die formschlüssigen Kodierungen erfasst werden können und die kodierten Radschrauben ohne weiteres mit diesen gelöst werden. Ferner sind nur eine vorbestimmte Anzahl von formschlüssigen Kodierungen möglich, sodass der Diebstahlschutz nicht ausreichend ist.

Beispielsweise ist aus der Druckschrift JP S60 18 401A ist ein Felgenschloss zur Diebstahlsicherung einer mittels Schraubverbindung befestigbaren Felge eines Fahrzeuges bekannt, wobei ein Sperrkörper zum Aufsetzen auf das Schraubverbindungselements vorgesehen ist, wobei der Sperrkörper zwischen einer Verriegelungsposition und einer Entriegelungsposition drehbar ist. Hierzu sind ein Bündel von Magneten mit jeweils zugeordneten Rückstellfedern vorgesehen, wobei die Freigabe über ein zusätzliches elektronisches Schloss erfolgt. Das bekannte Felgenschloss benötigt weitere Bauteile, um das Bewegen zwischen der Verriegelungsposition und der Entwicklungsposition zu ermöglichen. Demzufolge ergibt sich ein konstruktiv aufwendiger Aufbau. Insbesondere durch die Verwendung von mechanischen kraftaufbringen Bauteilen bei den Magneten in Verbindung mit den erforderlichen elektronischen Bauteilen ergibt sich eine komplizierte Funktionsweise, wodurch keine ausreichende Betriebssicherheit gegeben ist, da schon durch ein Verklemmen eines der mechanischen Federelemente oder durch den Ausfall einer der elektronischen Bauteile ein Entriegeln oder Verriegeln nicht mehr möglich ist.

Der vorliegenden Erfindung liegt die Aufgabe zu Grunde, eine Zugangssperre und Betätigungselement der eingangs beschriebenen Gattung vorzuschlagen, welche konstruktiv einfach aufgebaut und eine hohe Betriebssicherheit aufweist und zudem besonders kostengünstig ist.

Diese Aufgabe wird erfindungsgemäß durch die Merkmale des Patentanspruches 1 bzw. 14 gelöst, wobei vorteilhafte Ausgestaltungen den Unteransprüchen und der Beschreibung sowie den Zeichnungen zu entnehmen sind. Ferner sind besonders vorteilhafte Anwendungen in den Unteransprüchen beansprucht.

Somit wird eine Zugangssperre zum Aufsetzen auf ein Element, welches beispielsweise zum Befestigen oder auch zum Verriegeln von beliebigen Bauteilen oder dergleichen dient, vorgeschlagen. Die Zugangssperre weist einen magnetisch verriegelbaren und magnetisch entriegelbaren Sperrkörper zum Aufsetzen auf das zu sichernde Element auf, wobei eine Drehbewegung des Sperrkörpers durch zumindest einen bewegbaren Sperrmagneten sperrbar und freigebbar ist, wobei der Sperrkörper in einer Verriegelungsposition des Sperrmagneten formschlüssig mit dem Element verbunden ist und in einer Entriegelungsposition von dem Element entfernbar ist. Um eine konstruktiv einfach aufgebaute eine hohe Betriebssicherheit aufweisende Zugangssperre zu realisieren, ist der Sperrkörper zumindest abschnittsweise mit magnetisierbarem Material zum Beeinflussen der magnetischen Feldlinien des schwimmend gelagerten Sperrmagneten versehen, sodass der Sperrmagnet in der Verriegelungsposition haltbar ist, ohne das zusätzliche Bauteile im Inneren des Sperrkörpers erforderlich sind und wobei ein Betätigungselement mit zumindest einem mit dem zugeordneten Sperrmagneten korrespondierenden Betätigungsmagnet zum Entriegeln des Sperrkörpers vorgesehen ist.

Dadurch, dass jeder schwimmend gelagerte Sperrmagnet des Sperrkörpers ausschließlich durch berührungslose Magnetkräfte ohne zusätzliche kraftaufbringende Elemente zwischen der Verriegelungsposition und der Entriegelungsposition bewegbar ist und dass der Sperrkörper in der Ausgangsstellung durch das vorgesehene magnetisierbare Material aufgrund des in der Verriegelungsposition gehaltenen Sperrmagneten gesperrt ist, ergibt bei der erfindungsgemäßen Zugangssperre einerseits ein konstruktiv einfacher Aufbau und zugleich eine hohe Betriebssicherheit. Durch erfindungsgemäß vorgesehene berührungslose Positionierung der Sperrmagneten wird somit eine besonders sichere und zugleich kostengünstige Zugangssperre realisiert.

Als magnetisierbares Material können bevorzugt ferritische Einsätze oder dergleichen an dem Sperrelement und/oder an dem Gehäuseelement des Sperrkörpers vorgesehen sein. Die ferritischen Einsätze können z. B. ringförmig, scheibenförmige oder dergleichen ausgeführt sein. Es ist auch denkbar, dass lediglich Segmente von Ringen oder Scheiben sozusagen abschnittsweise vorgesehen sind.

Um die erfindungsgemäße Zugangssperre zu entriegeln, wird jeder Sperrmagnet aus der Ausgangsstellung bzw. aus der Verriegelungsposition berührungslos durch den zugeordneten Betätigungsmagneten in die Entriegelungsposition bewegt. Nur mit einem entsprechend passend magnetisierten Betätigungselement bzw. Magnetschlüssel kann ein Lösen der Zugangssperre realisiert werden. Ohne das passende Betätigungselement ist ein Entriegeln quasi unmöglich. Somit wird mit der vorgeschlagenen Zugangssperre auf einfachste Weise ein besonders hoher Diebstahlschutz realisiert.

Der hohe Diebstahlschutz wird im Wesentlichen dadurch erreicht, dass der bzw. die vorgesehenen Sperrmagneten in dem Sperrkörper frei positionierbar sind, um eine entsprechende magnetische Kodierung vorzugeben. Aufgrund der beliebigen Anordnungsmöglichkeiten ergeben sich nahezu unendliche Kodiermöglichkeiten, die zudem von außen nicht zu erkennen sind, da die Sperrmagnete sich im Inneren des Sperrkörpers befinden. Neben der Anordnungsposition der Magneten kann zudem die Polarität variiert werden, welches die Kodiermöglichkeiten weiter erhöht. Das zum Entriegeln des Sperrkörpers erforderliche Betätigungselement weist die gleiche Anzahl an korrespondierenden Betätigungsmagneten auf, wobei diese an korrespondierenden Anordnungspositionen vorgesehen sind, wobei die Polarität der Betätigungsmagneten in dem Betätigungselement entgegengesetzt als die der Sperrmagnete ausgerichtet ist, um eine axiale Bewegung der jeweils zugeordneten Schließ- bzw. Sperrmagneten zum Freigeben der Drehbewegung zu ermöglichen.

Gegen gewaltsames Aufbrechen kann zum Beispiel der Sperrkörper oder Teile davon aus gehärtetem Material, wie zum Beispiel Metall, Edelmetall oder dergleichen ausgeführt sein, wobei der Sperrkörper im Inneren vorzugsweise aus Kunststoffmaterial oder dergleichen ausgeführt ist. Dies hat den Vorteil, dass durch die entstehende Wärme, wenn ein gewaltsames Aufbrechen zum Beispiel durch Aufbohren vorgenommen wird, das Kunststoffteil einschmilzt und somit ein Verdrehen des Sperrkörpers nicht mehr möglich ist.

Das erfindungsgemäße Prinzip ist bei verschiedensten Anwendungen einsetzbar, bei denen lediglich die geometrische Form und die Abmessungen der Kontur von Sperrkörper und Element angepasst werden muss.

Besonders vorteilhaft ist die Verwendung der vorgeschlagenen Zugangssperre bei einem Befestigungselement bzw. bei einer Radschraube zum Befestigen einer Felge an einem Fahrzeug. Die vorgeschlagenen Zugangssperre bzw. der Sperrkörper wird auf den Kopf der Radschraube bzw. auf die Radmutter aufgesteckt und kann durch die Drehbewegungen formschlüssig mit dieser verbunden werden. Der Formschluss kann beispielsweisedurch einen Hinterschnitt oder der gleichen an der Radschraube realisiert werden. Somit wird der Zugang zur Radschraube gesperrt und ein unerwünschtes Lösen verhindert. Die Zugangssperre kann bei beliebigen Fahrzeugen zum Sichern von Felgen eingesetzt werden. Dies ist nicht nur bei zweispurigen Fahrzeugen, wie bei Personenkraftwagen, Lastkraftwagen oder Arbeitsmaschinen einsetzbar, sondern auch bei einspurigen Fahrzeugen, wie zum Beispiel Motorrädern, Fahrrädern oder dergleichen. Bei nicht versenkt liegendem Schraubverbindungselement kann das Schraubverbindungselement bzw. die Radschraube vorzugsweise mit einem z. B frei um das Schraubverbindungselement drehenden Außenmantel oder einer äußeren Schutzhülse versehen sein, so dass ein Angriff mit einem Werkzeug, z. B. einer Rohrzange, auf die erfindungsgemäße Anordnung weiter erschwert wird.

Mit der Zugangssperre lassen sich aber auch Abdeckungen oder Befestigungen von Fahrzeugteilen sichern, welche allgemein nicht zugänglich sein sollten, wie zum Beispiel GPS-Ortungssysteme, Diebstahlsicherungsgeräte oder Diebstahl sichere Behältnisse zur Aufbewahrung von Wertgegenständen in Fahrzeugen, zum Beispiel im Kofferraum.

Ein weiterer besonders vorteilhafter Anwendungsbereich betrifft die Anwendung der Zugangssperre bei einem sogenannten Drehriegelschlössern, bei Zylinderschlössern oder dergleichen. Hierbei wird das jeweilige Verriegelungselement des Drehriegelschlosses oder des Zylinderschlosses durch den Sperrkörper der erfindungsgemäßen Zugangssperre geschützt. Durch die Wahl der korrespondierenden Konturen an dem Sperrkörper und dem Verrieglungselement kann dieser auf das jeweilige Verriegelungselement aufgesteckt werden und in einer vorgesehenen Ausnehmung, Hinterschneidung oder dergleichen formschlüssig mit dem Sperrkörper verbunden werden.

Bei der Zugangssicherung von Drehriegelschlössern, zum Beispiel bei Büromöbeln, können diese mit einfachen Steckschlüsseln, welche auf die standardmäßige Betätigungen, wie Dreikant, Vierkant usw. gesteckt werden, geöffnet und verriegelt werden. Sollen jedoch bestimmte sich möglicherweise auch wechselnde Schubladen, Schranktüren oder Spinntüren nur vom jeweiligen Büronutzer geöffnet werden können, so steckt dieser seine persönliche Zugangssperre auf das Verriegelungselement des Drehriegelschlosses und verriegelt dieses durch die entsprechende Betätigung der Zugangssperre. Bei einem Bürowechsel muss kein Schlüsseltausch erfolgen. Der Mitarbeiter nimmt seine persönliche Zugangssperre einfach mit und kann diese an seinem neuen Arbeitsplatz sofort weiterbenutzen. Auch Probleme mit verloren gegangenen Schlüsseln gehören damit der Vergangenheit an.

Bei Schaltschränken kann der Lieferant bis zur Geräteübergabe seine Steuerung durch Verwendung seiner persönlichen Zugangssperre vor Manipulation durch unbefugte schützen. Nach der Anlagenübergabe an den Kunden kann dieser den Zugang der Steuerung durch Aufsetzen der persönlichen Zugangssperre eines befugten Mitarbeiters oder durch Aufsetzen einer gruppemäßig kodierten Zugangssperre unterbinden. Bei Verwendung der Zugangssperre an Schließzylindern an Haus und Wohnungstüren kann bei entsprechender Ausgestaltung des Türschildes die Zugangssperre den direkten Zugang zum Schließzylinder verhindern. Ein Einbrecher müsste zuerst die Zugangssperre überwinden, bevor er den Schließzylinder erreicht. Damit ist ein schneller Einbruch nicht mehr möglich.

Das Betätigungselement der vorbeschriebenen Zugangssperre mit zumindest einem mit einem zugeordneten Sperrmagneten korrespondierenden Betätigungsmagnet zum Entriegeln des Sperrkörpers wird separat beansprucht.

Die vorliegende Erfindung wird anhand der Zeichnungen weiter erläutert. Es zeigen:
Figur 1 eine Explosionsdarstellung einer Ausführungsvariante einer erfindungsgemäßen Zugangssperre für ein Element zum Befestigen;
Figur 2 eine Explosionsdarstellung gemäß Figur 1 aus einer anderen Sicht;
Figur 3 eine Draufsicht auf einen Sperrkörper der Zugangssperre im verriegelten Zustand;
Figur 4 eine geschnittene Ansicht entlang der Schnittlinie A-A gemäß Figur 3;
Figur 5 eine Draufsicht auf den Sperrkörper der erfindungsgemäßen Zugangssperre im entriegelten Zustand;
Figur 6 eine geschnittene Ansicht entlang der Schnittlinie B-B gemäß Figur 5;
Figur 7 eine dreidimensionale schematische Ansicht einer weiteren Verwendungsvariante der Zugangssperre mit einem Drehriegelschloss;
Figur 8 eine dreidimensionale schematische Ansicht der Verwendungsvariante der Zugangssperre gemäß Figur 7 für drei über einen Kniehebel miteinander verbundene Drehriegelschlösser;
Figur 9 eine weitere Ansicht der Ausführung gemäß Figur 8;
Figur 10 eine dreidimensionale schematische Ansicht einer weiteren A Verwendungsvariante der Zugangssperre mit einem Zylinderschloss;
Figur 11 eine Darstellung gemäß Figur 10 aus einer anderen Sicht;
Figur 12 eine weitere Ansicht der Ausführung gemäß Figuren 10 und 11 mit auf das Zylinderschloss aufgesetztem Sperrkörper;
Figur 13 eine Draufsicht auf die Zugangssperre mit angesetztem Betätigungselement;
Figur 14 eine geschnittene Ansicht entlang der Schnittlinie C-C gemäß Figur 13;
Figur 15 eine Draufsicht auf die Zugangssperre mit angedrücktem Betätigungselement; und
Figur 16 eine geschnittene Ansicht entlang der Schnittlinie D-D gemäß Figur 15.

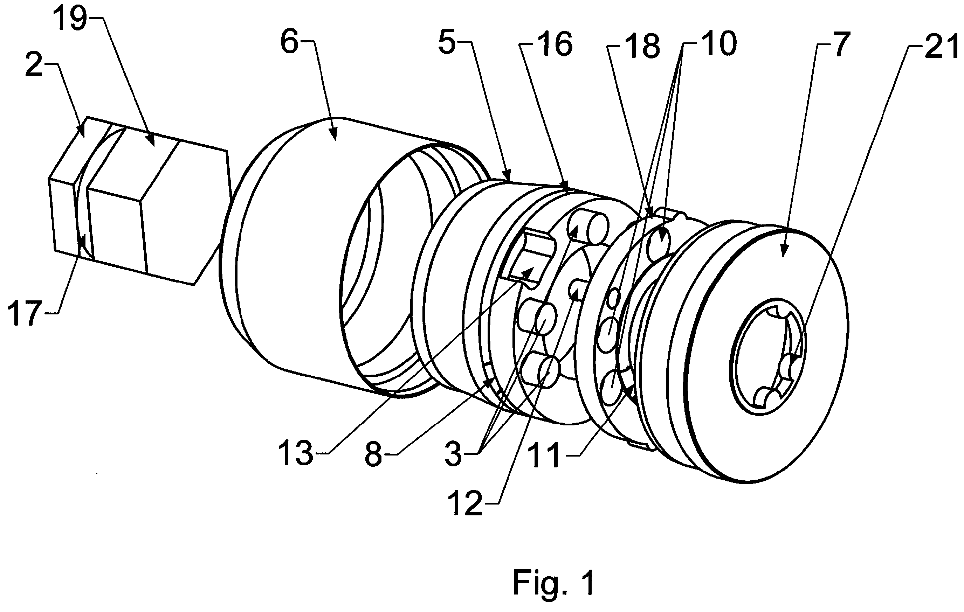

Die erfindungsgemäße Zugangssperre dient dazu z. B. ein Element zum Befestigen oder Verriegeln zu sperren oder freizugeben, in dem die Zugangssperre auf das Element aufgesteckt und wieder entnommen werden kann. In den Figuren 1 bis 16 sind verschiedene Anwendungen der Zugangssperre beispielhaft dargestellt, wobei das Funktionsprinzip bei sämtlichen Anwendungen identisch ist.

Unabhängig von dem Anwendungsbereich umfasst die Zugangssperre einen magnetisch verriegelbaren und magnetisch entriegelbaren Sperrkörper 1 zum Aufsetzen auf das Element, welches beispielsweise als Schraubverbindungselement 2 zum Beispiel einer nicht weiter dargestellten Felge eines Fahrzeuges beliebiger Art oder als Verriegelungselement 2A zumindest eines Drehriegelschlosses 27 oder als Schließzylinderelement 2B eines Zylinderschlosses 28 ausgeführt sein kann. Eine Drehbewegung des Sperrkörpers 1 ist durch einen oder mehrere Sperrmagneten 3 sperrbar und freigebar. Der Sperrkörper 1 ist in einer Verriegelungsposition jedes Sperrmagneten 3 formschlüssig mit dem Element verbunden und in einer Entriegelungsposition von dem Element wieder entfernbar. Der Sperrkörper 1 ist zumindest abschnittsweise mit magnetisierbarem Material als ferritische Einsätze 8, 8A, 11 zum Beeinflussen der magnetischen Feldlinien jedes schwimmend gelagerten Sperrmagneten 3 versehen, sodass jeder Schließmangel 3 in der Verriegelungsposition haltbar ist. Ein Betätigungselement 4 ist mit zumindest einem mit dem zugeordneten Sperrmagneten 3 korrespondierenden Betätigungsmagneten 3A zum Entriegeln der Sperrkörper 1 versehen.

Der Sperrkörper 1 umfasst zumindest ein Gehäuseelement 6 und zumindest ein Sperrelement 5, wobei das Gehäuseelement 6 drehbar auf dem Sperrelement 5 zum Sperren und Entriegeln des Sperrkörpers 1 gelagert ist. Als magnetisierbares Material ist zumindest ein ferritischer Einsatz 8, 8A, 11 an dem Sperrelement 5 und/oder an dem Gehäuseelement 6 des Sperrkörpers 1 vorgesehen. Das zylindrische Sperrelement 5 weist zumindest eine axial ausgerichtete Ausnehmung 9, z. B. eine Bohrung zum Aufnehmen des axial bewegbaren Sperrmagneten 3 auf. Jeder Ausnehmung 9 ist ein korrespondierender Aufnahmebereich 10 als Magnettasche in einem Deckelbereich 24 des Gehäuseelementes 6 zum Sperren bzw. Verrasten des Sperrkörpers zugeordnet.

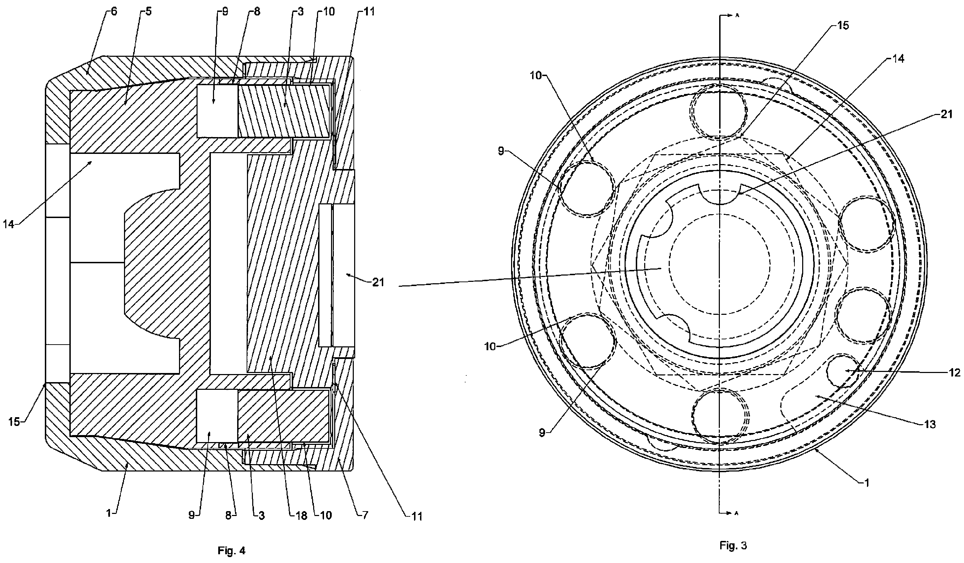

In der Verriegelungsposition des Sperrmagneten 3 ist die zugeordnete Ausnehmung 9 des Sperrelements 5 mit dem zugeordneten Aufnahmebereich 10 deckungsgleich angeordnet und der in der Ausnehmung bzw. Bohrung 9 angeordnete Schließ- bzw. Stabmagnet 3 abschnittsweise in dem zugeordneten Aufnahmebereich 10 zum Sperren der Drehbewegung des Sperrkörpers 1 angeordnet, wie dies in Figur 3 und 4 bzw. 13 und 14 dargestellt ist.

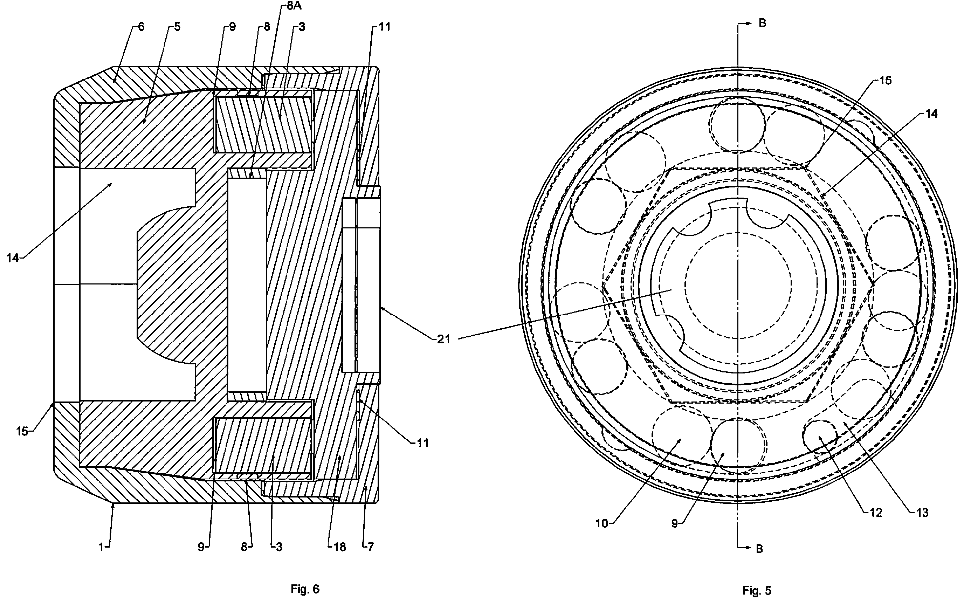

In der Entriegelungsposition des Sperrmagneten 3 ist die zugeordnete Ausnehmung 9 des Sperrelements 5 nicht deckungsgleich mit dem zugeordneten Aufnahmebereich 10 angeordnet und der Sperrmagnet 3 ausschließlich in der Ausnehmung 9 zum Entriegeln bzw. Freigeben der Drehbewegung des Sperrkörpers 1 angeordnet, wie dies in Figur 5 und 6 bzw. 15 und 16 dargestellt ist.

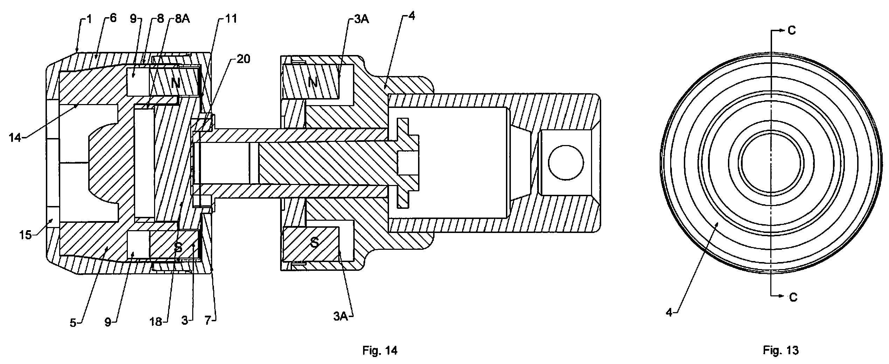

Zumindest ein erster ferritischer Einsatz 8 zum Beeinflussen der magnetischen Feldlinien jedes schwimmend gelagerten Sperrmagneten 3 ist in einer ringförmigen Nut 16 am Außenumfang des Sperrelements 5 vorgesehen. Somit können mehrere über den Umfang verteilte erste ferritische Einsätze 8 in der Nut 16 angeordnet sein, sodass diese sich radial außen bzw. radial außerhalb bezogen auf die in dem Sperrkörper 1 angeordneten Ausnehmungen 9 befinden, wie dies insbesondere in Figur 1,4, 6, 14 und 16 gezeigt ist. Aus Figur 14 ist ersichtlich, dass die ersten ferritischen Einsätze 8A auch radial innen bzw. radial innerhalb bezogen auf die in dem Sperrkörper 1 angeordneten Ausnehmungen 9 angeordnet sein können. Somit ist es möglich, dass erste ferritische Einsätze 8 radial außen und/oder erste ferritische Einsätze 8A radial innen bezogen auf die Ausnehmungen 9 angeordnet sind.

Der Deckelbereich 24 des Gehäuseelementes 6 umfasst eine die Aufnahmebereiche 10 als Magnettaschen aufweisende Rastscheibe 18 und eine Frontscheibe 7 sowie eine Kodierkontur 21 zum Drehen des Gehäuseelements 6 mit dem Betätigungselementes 4 zum Sperren und Entriegeln des Sperrkörpers 1, wobei die Rastscheibe 18 und die Frontscheibe 7 drehfest mit dem Gehäuseelement 6 verbunden sind. Das Betätigungselement 4 weist an einem Ende eine mit der Kodierkontur 21 der Frontscheibe 7 korrespondierende Kodierkontur 20 auf, wobei dem Ende zumindest ein mit dem Sperrmagnet 3 korrespondierender Betätigungsmagnet 3A zugeordnet ist, sodass der in der zugeordneten Ausnehmung 9 schwimmend gelagerte Sperrmagnet 3 aufgrund der einander zugewandten identischen Polen N-N oder S-S axial aus dem Aufnahmebereich 10 zum Entriegeln des Sperrkörpers 1 bewegbar ist und nach dem Entfernen des Betätigungselementes 4 automatisch in die Verriegelungsposition und damit in den Aufnahmebereich 10 bewegbar ist.

Zum Beeinflussen der magnetischen Feldlinien jedes schwimmend gelagerten Sperrmagneten 3 ist zumindest ein zweiter ferritischer Einsatz 11 radial innen und/oder radial außen bezogen auf die Aufnahmebereiche 10 am Deckelbereich des Gehäuseelementes 6 vorgesehen, um das Magnetfeld der Sperrmagneten 3 zu verstärken. Vorzugsweise sind die zweiten ferritischen Einsätze 11 über den Umfang verteilt angeordnet und dem Ende des jeweiligen Aufnahmebereiches 10 zugeordnet.

Ein Bodenbereich des Sperrelementes 5 weist einen Konturaufnahmeabschnitt 14 zum Aufnehmen eines Konturabschnittes 19 des Elementes 2 auf, wobei dem Konturaufnahmeabschnitt 14 des Sperrelementes 5 ein Konturausschnitt 15 des Gehäuseelementes 6 zugeordnet ist, wobei zum Aufsetzen des Sperrkörpers 1 auf das Element 2 der Konturaufnahmeabschnitt 14 des Sperrelementes 5 deckungsgleich mit dem Konturausschnitt 15 des Gehäuseelementes 6 ausgerichtet ist, welches in den Figuren 5 und 6 gezeigt ist. Beim verriegelten Sperrkörper 1 gemäß Figuren 3 und 4 ist das Gehäuseelement 6 derart verdreht, dass der Konturaufnahmeabschnitt 14 des Sperrelementes 5 nicht deckungsgleich mit dem Konturausschnitt 15 des Gehäuseelementes 6 ausgerichtet ist und der Rand des Konturausschnittes 15 des Gehäuseelements 6 zumindest abschnittsweise formschlüssig mit dem Element 2 verbunden ist.

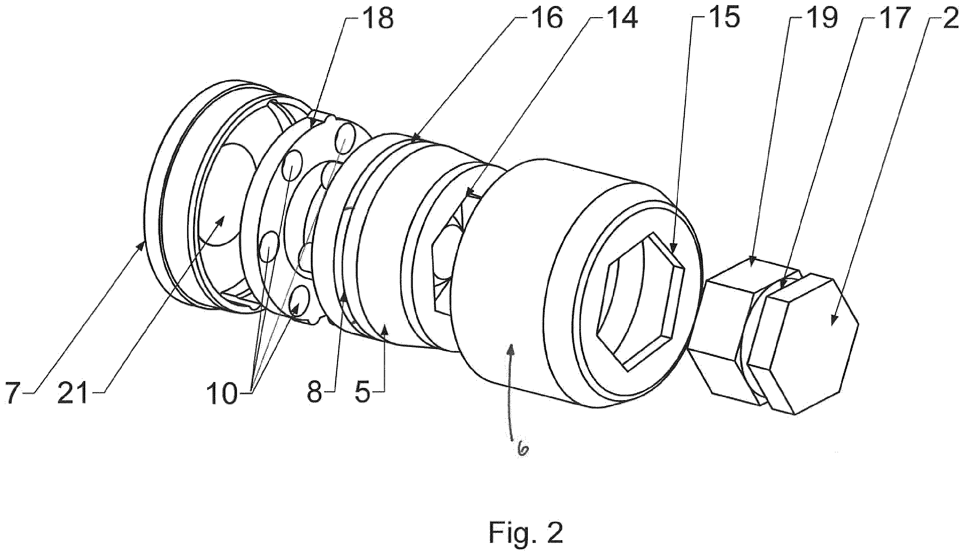

Die den prinzipiellen Aufbau der erfindungsgemäßen Zugangssperre erläuternden Explosionsdarstellungen gemäß Figuren 1 und 2 zeigen beispielhaft als Element ein Schraubenverbindungselement 2 zum Befestigen einer Felge eines Fahrzeuges mit einem als Sechskantabschnitt ausgeführten Konturabschnitt 19, wobei an dem der Felge zugewandten Ende des Konturabschnittes 19 eine Hinterschneidung 17 zum formschlüssigen Verbinden mit dem Sperrkörper 1 vorgesehen ist. Um den Sperrkörper 1 der Zugangssperre auf das vorstehende Schraubenverbindungselement 2 aufstecken zu können, ist der Konturaufnahmeabschnitt 14 am Bodenbereich des Sperrelementes 5 und der Konturausschnitt 15 des Gehäuseelementes 6 entsprechend als Sechskantabschnitt gestaltet, wie dies in Figur 2 dargestellt ist.

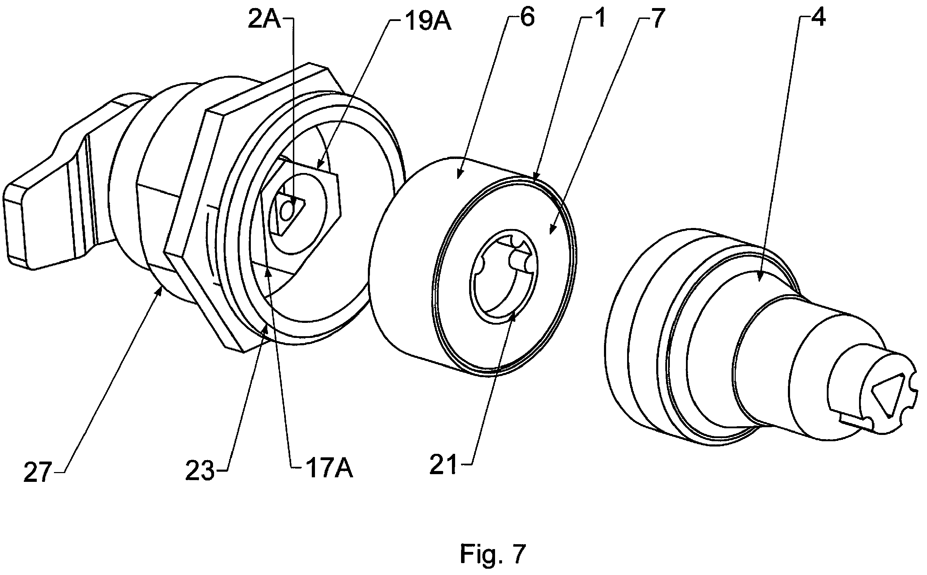

In den Figuren 7 bis 9 ist eine weitere Anwendung der Zugangssperre dargestellt, bei der als Element ein Verriegelungselement 2A eines Drehriegelschlosses 27 vorgesehen ist, wobei das von dem Drehriegelschloss 27 vorstehende Verrieglungselement 2A von einer Schlossblende 23 des Drehriegelschlosses 27 schützend vor Manipulation umgeben ist. Das Verrieglungselement 2A ist mit einem Drehriegelmehrkantabschnitt als Konturabschnitt 19A versehen, wobei an dem dem Drehriegelschloss 27 zugewandten Ende eine Hinterschneidung 17A zum formschlüssigen Verbinden mit dem Sperrkörper 1 vorgesehen ist. Um den Sperrkörper 1 der Zugangssperre auf das vorstehende Verrieglungselement 2A aufstecken zu können, sind der nicht sichtbare Konturaufnahmeabschnitt am Bodenbereich des Sperrelementes 5 und der nicht sichtbare Konturausschnitt des Gehäuseelementes 6 entsprechend als Drehriegelmehrkantabschnitt gestaltet.

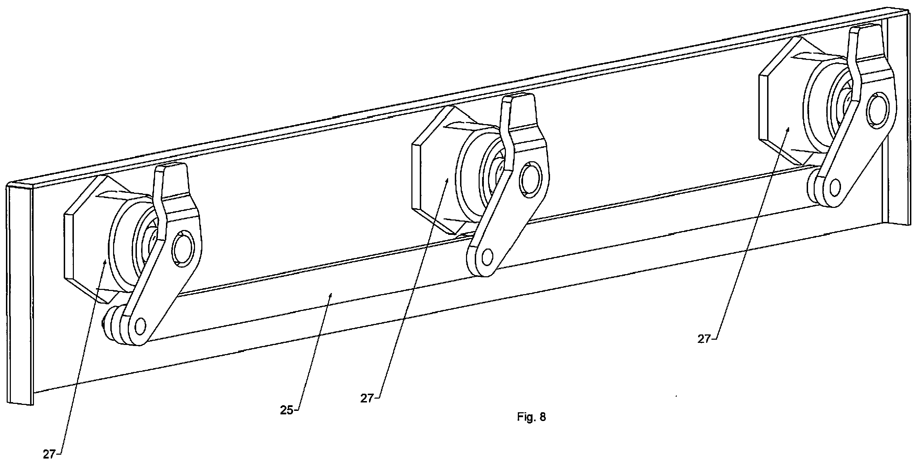

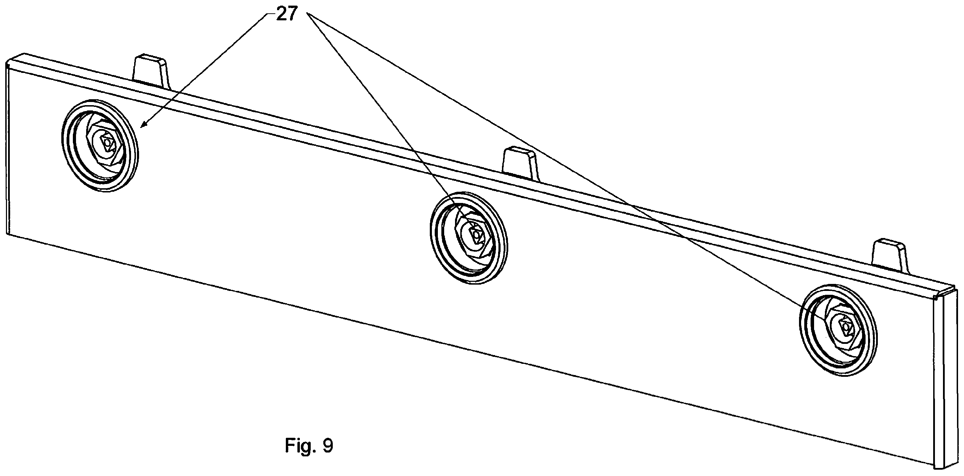

In Figur 7 ist das Drehriegelschloss 27 mit dem Sperrkörper 1 der Zugangssperre und dem zum Aufstecken vorgesehenen Entriegelungsschlüssel bzw. Betätigungselement 4 quasi in einer Darstellung gezeigt. In den Figuren 8 und 9 ist eine Anwendung gezeigt, bei der drei Drehriegelschlösser 27 über einen Kniehebel 25 zur gemeinsamen Betätigung verbunden sind. Wie insbesondere aus Figur 9 ersichtlich ist, kann auf jedes der Drehriegelschlösser 27 eine Zugangssperre aufgesetzt werden, um den Zugang bzw. die Handhabung zu sperren. Wenn drei unterschiedliche personifizierte Zugangssperren verwendet werden, können quasi drei unterschiedliche Benutzer mit ihrem persönlichen Betätigungselement 4 die Drehriegelschlösser 27 öffnen.

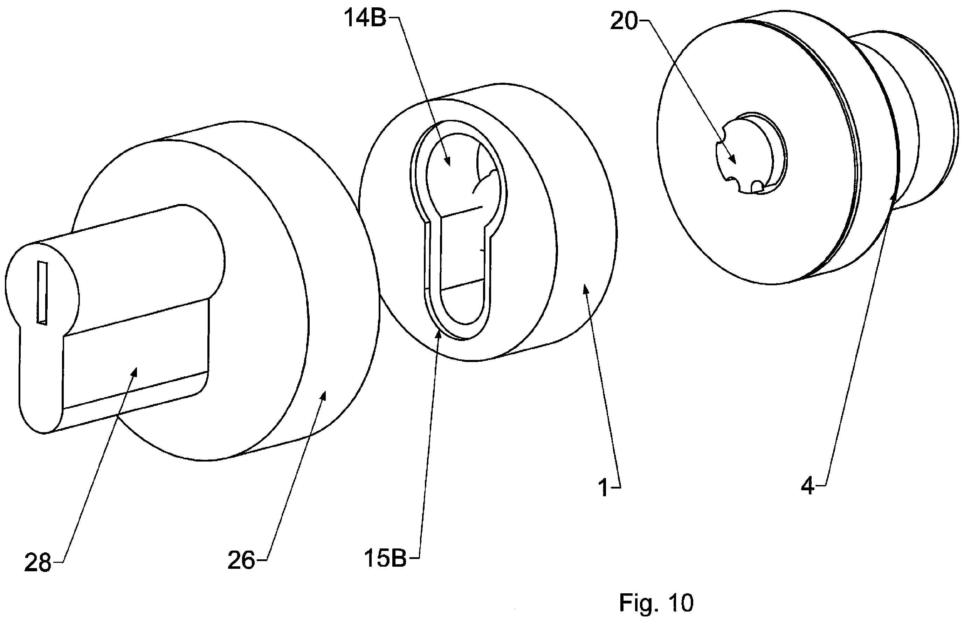

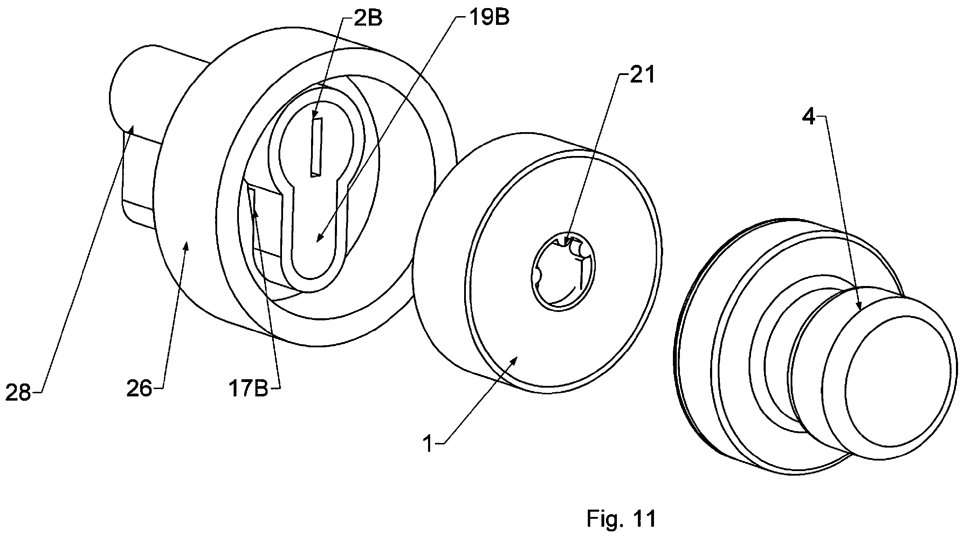

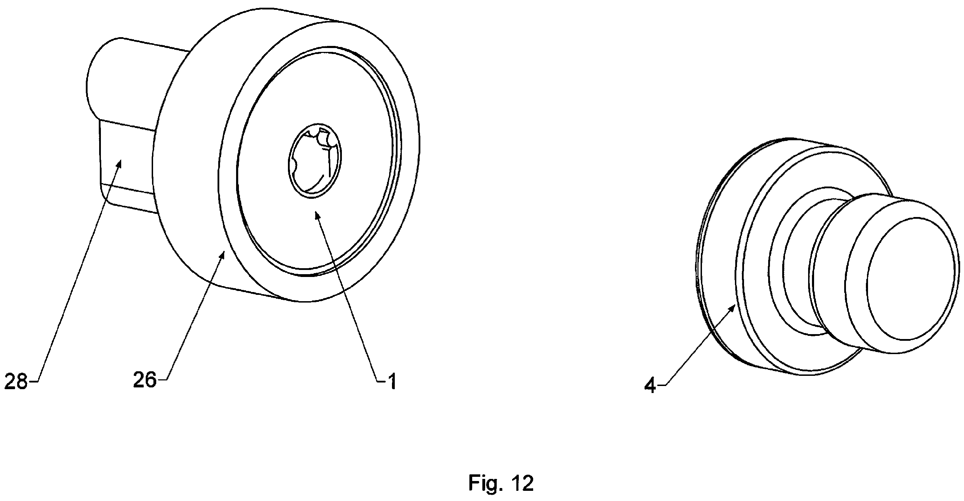

In den Figuren 10 bis 12 ist eine weitere Anwendung der Zugangssperre dargestellt, bei der als Element ein Schließzylinderelement 2B eines Zylinderschlosses 28 vorgesehen ist. Das Zylinderschloss 28 weist hierzu im Bereich des Schließbleches eine Schlossblende 26 auf, die einen Endabschnitt des Schließzylinderelements 2B mit einem schließzylinderförmigen Konturabschnitt 19B schützend umgibt. Um den Sperrkörper 1 der Zugangssperre auf das vorstehende Schließzylinderelement 2B aufstecken zu können, ist der Konturaufnahmeabschnitt 14B am Bodenbereich des Sperrelementes 5 und der Konturausschnitt 15B des Gehäuseelementes 6 entsprechend schließzylinderförmig gestaltet, wie dies in Figur 10 dargestellt ist. Figur 11 zeigt diese Anwendung aus einer anderen Sicht. In Figur 12 ist die Zugangssperre bereits auf das Schließzylinderelement 2B des Zylinderschlosses 28 aufgesteckt, wobei ferner der Entriegelungsschlüssel bzw. das Betätigungselement 4 gezeigt ist.

Die magnetische Zugangssperre wird demzufolge unabhängig von dem Anwendungsbereich auf einen Konturabschnitt 19, 19A, 19B mit entsprechenden Hinterschnitt 17, 17A, 17B aufgesetzt und formschlüssig verriegelt. Dies kann im Fall der Verwendung als Felgenschloss die speziell gestaltete Radmutter bzw. Radschraube als Schraubverbindungselement 2 sein oder bei der Verwendung als Schrankschloss das speziell gestaltete Verriegelungselement 2A sein, welches den Konturabschnitt 19A quasi im Inneren bzw. in der Schlossblende 23 des Drehriegelschlosses 27 aufweist. Bei der Verwendung als Sicherungsabdeckung bzw. Zugangssperre bei dem Zylinderschloss 28 wird die Schlossblende 26 so ausgeführt, dass das vorstehende halsförmige Schließzylinderelement 2B um das Zylinderschloss 28 stehen bleibt, welcher den Hinterschnitt 17B aufweist. Die Konturmulde bzw. der Konturaufnahmeabschnitt 14B am Bodenbereich des Sperrelements 5 hat eine korrespondierende Form, wie das Schließzylinderelement 2B und wird auf dieses aufgesteckt. Unabhängig von der Anwendung kann die Kontur vielfältig gestaltet sein, zum Beispiel als Mehrkant, Ovalkonturen oder beliebig gestaltete Konturen, die jedoch so ausgeführt sind, dass eine formschlüssige Verbindung möglich ist.

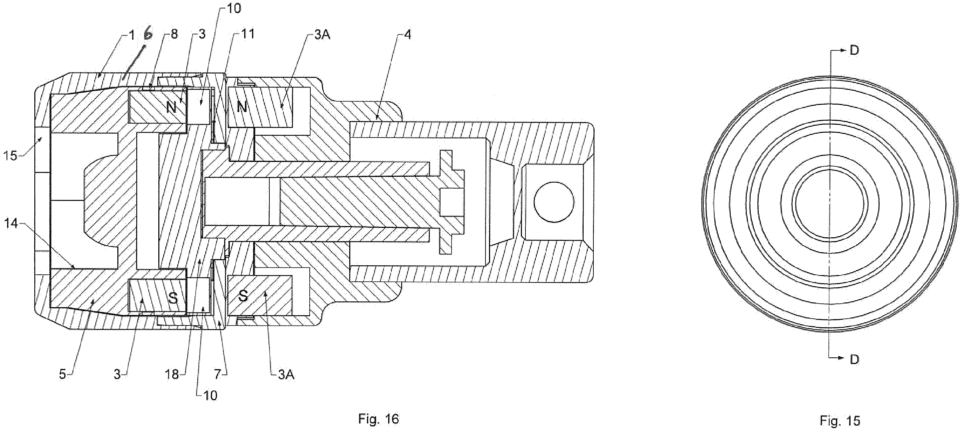

Aus Figuren 13 und 14 ist ersichtlich, dass das Sperrelement 5 derart mit den ersten ferritischen Einsätzen 8, 8A, 11 ausgestattet ist, dass dadurch die Feldlinien der Sperrmagneten bzw. der Stabmagneten 3 so beeinflusst werden, dass diese in Richtung der Rastscheibe 18 schwimmen und somit bei deckungsgleicher Anordnung von Ausnehmungen 9 und Aufnahmebereichen 10 in die Magnettaschen bzw. in die Aufnahmebereiche 10 der Rastscheibe 18 gedrückt werden und in dieser Position bleiben. Dies kann entsprechend der Magnetpositionen und deren Polarität zusätzlich durch die zweiten ferritischen Einsätze 11 in der Rastscheibe 18 oder in der Frontscheibe 7 des Deckelbereiches des Gehäuseelements 6 unterstützt werden. Die Sperrmagneten 3 selbst haben dabei keinen direkten Kontakt zu den ferritischen einsetzen 8, 8A, 11, da sonst eine wesentlich stärker magnetische Kraft der gleich gepolten Betätigungsmagnete 3A im Entriegelungsschlüssel bzw. in dem Betätigungselement 4 notwendig wäre, um die Sperrmagnete 3 aus den Aufnahmebereichen 10 der Rastscheibe 18 in die Ausnehmungen bzw. Bohrungen 9 des Sperrelements 5 zurückzudrücken, um die Verriegelung zu lösen, wie dies in Figur 15 und 16 gezeigt ist.

Die Lage und die Position der Sperrmagneten 3 im Sperrkörper 5 kann nahezu beliebig gewählt werden und erlaubt so eine Vielzahl von Kodiermöglichkeiten. Es ist jedoch darauf zu achten, dass bei einer Drehung der Rastscheibe 18 innerhalb der Drehbegrenzungsaussparung 13 durch den Anschlagstift 12 keine andere Magnetposition deckungsgleich wird, in welche der Sperrmagnet 3 einrasten kann. Vorzugsweise sind die Sperrmagnet 3 bzw. die Ausnehmungen 9 mit den zugeordneten Aufnahmebereichen 10 über den Umfang verteil angeordnet, wie die beispielsweise aus den Figuren 3 und 5 ersichtlich ist.

Bei der beschriebenen Zugangssperre werden keine Federn hinter den Sperrmagneten in den Ausnehmungen 9 oder andere mechanische Bauteile benötigt, um die Sperrmagneten 3 in die Aufnahmebereiche 10 der Rastscheibe 18 zu drücken und dort festzuhalten. Damit die Rastscheibe 18 nur zwischen der Verriegelungsposition und der Entriegelungsposition bewegt werden kann, ist die Rastscheibe 18 mit dem Anschlagstift 12 in der Drehbegrenzung Aussparung 13 des Sperrelements 5 geführt.

Nach dem Zusammenbau der Zugangssperre sind das Gehäuseelements 6 mit der Rastscheibe 18 und der Frontscheibe 7 zu einer festen Einheit verbunden. Es ist ohne weiteres denkbar, dass das Gehäuseelement 6 auch einteilig mit Rastscheibenabschnitt und Frontscheibenabschnitt ausgeführt ist. Das Sperrelement 5 kann sich jedoch innerhalb seiner Anschläge der Drehbegrenzungsaussparung 13 frei zwischen der Entnahmeposition und der ein Rastposition bzw. zwischen der Verriegelungsposition und der Entriegelungsposition drehen. In der Entriegelungsposition, die der Montageposition entspricht, ist der Konturaufnahmeabschnitt 14 am Bodenbereich des Sperrelements 5 bzw. die sogenannte Konturmulde und der Konturausschnitt 15 des Gehäuseelements 6 deckungsgleich. Somit kann das Magnetschloss bzw. die Zugangssperre auf den entsprechenden Konturabschnitts 19, 19 A, 19 B des Schraubverbindungselements 2 bzw. des Verriegelungselemente 2A bzw. des Schließzylinderelements 2B aufgesteckt oder von diesem abgezogen werden.

Das in den Figuren 14 und 16 geschnitten dargestellte Betätigungselement 4 umfasst an dem dem Sperrkörper 1 zugewandten Ende über den Umfangsbereich mehrere Betätigungsmagneten 3A, die mit den in dem Sperrkörper 1 angeordneten Sperrmagneten 3 bezüglich der Anordnungsposition korrespondieren, jedoch entgegengesetzte Polarität aufweisen, so dass sich jeweils identische Südpole S-S oder Nordpole N-N gegenüberliegen. In Figur 14 ist die Kodierkontur 20 in die korrespondierende Kodierkontur 21 an dem Deckelbereich des Gehäuseelements 6 auf bzw. angesetzt. Die Kodierkontur 20 des Betätigungselements 4 ist entsprechend gefedert, sodass sichergestellt ist, dass das Betätigungselement 4 auf den Sperrkörper 1 sicher ausgesetzt ist, so dass Schließmagneten 3 und Betätigungselement 3A korrekt zueinander ausgerichtet sind.

Wie in Figur 16 gezeigt, wird nun das Betätigungselement 4 gegen die Federkraft auf den Sperrkörper 1 angedrückt, so dass die Betätigungsmagnete 3A den Sperrmagneten 3 angenähert werden. Dadurch werden die Sperrmagnete 3 aus den Aufnahmebereichen 10 gedrückt und geben den Sperrkörper 1 frei. Durch das Drehen des Betätigungselements 4 wird auch das Gehäuseelement 6 verdreht bis die Entriegelungsposition erreicht wird, welche einem Endbereich der Drehbegrenzungsaussparung 13 entspricht. In der Entriegelungsposition sind der Konturausschnitt 15, 15B des Gehäuseelements 6 deckungsgleich mit dem Konturaufnahmeabschnitt 14, 14B am Bodenbereich des Sperrelements 5, sodass der Sperrkörper 1 von dem Konturabschnitt 19, 19A, 19B des Elementes entnommen werden kann. Zum Verriegeln der Zugangssperre wird der Sperrkörper 1 wieder auf den Konturabschnitt 19, 19A, 19B des Elementes aufgesetzt und das Gehäuseelement 6 mit dem Betätigungselement 4 in die Verriegelungsposition verdreht, welche dem anderen Anschlag der Drehbegrenzungsaussparung 13 entspricht. Hierbei verbleibt das mit dem Konturaufnahmeabschnitt 14, 14B formschlüssig auf dem Konturabschnitt 19, 19A, 19B des Elementes sitzende Sperrelement 5 in seiner Position, sodass eine Relativbewegung zwischen dem Gehäuseelement 6 und dem Sperrelement 5 ermöglicht wird. Sobald der Betätigungsschlüssel 4 von dem Deckelbereich des Gehäuseelements 6 entfernt wird, werden die Sperrmagnete 3 in die deckungsgleich angeordneten Aufnahmebereiche 10 gedrückt und Verriegeln den Sperrkörper 1.

### Bezugszeichen

- 1: Sperrkörper
- 2: Schraubverbindungselement
- 2A: Verriegelungselement
- 2B: Schließzylinderelement
- 3: Sperrmagnet bzw. Schließmagnet
- 3A: Betätigungsmagnet
- 4: Betätigungselement bzw. Entriegelungsschlüssel
- 5: Sperrelement
- 6: Gehäuseelement
- 7: Frontscheibe
- 8, 8A: erster ferritischer Einsatz
- 9: Ausnehmung bzw. Bohrung
- 10: Aufnahmebereich
- 11: zweiter ferritischer Einsatz
- 12: Anschlagstift
- 13: Drehbegrenzungsaussparung
- 14,14A,14B: Konturaufnahmeabschnitt am Bodenbereich des Sperrelementes
- 15,15A,15B: Konturausschnitt des Gehäuseelementes
- 16: ringförmige Nut des Sperrelements
- 17,17A,17B: Hinterschneidung
- 18: Rastscheibe
- 19,19A,19B: Konturabschnitt des Elementes
- 20: Kodierkontur an dem Betätigungselementes
- 21: Kodierkontur an dem Deckelbereich des Gehäuseelementes
- 23: Schlossblende des Drehriegelschlosses
- 25: Kniehebel
- 26: Schlossblende des Zylinderschlosses
- 27: Drehriegelschloss
- 28: Zylinderschloss
- N: magnetischer Nordpol
- S: magnetischer Südpol

## Patentansprüche

1. Zugangssperre zum Aufsetzen auf ein Element (2, 2A, 2B) zum Befestigen oder Verriegeln, mit einem magnetisch verriegelbaren und magnetisch entriegelbaren Sperrkörper (1) zum Aufsetzen auf das Element (2, 2A, 2B), wobei eine Drehbewegung des Sperrkörpers (1) durch zumindest einen bewegbaren Sperrmagneten (3) sperrbar und freigebbar ist, wobei der Sperrkörper (1) in einer Verriegelungsposition des Sperrmagneten (3) formschlüssig mit dem Element (2, 2A, 2B) verbunden ist und in einer Entriegelungsposition von dem Element (2, 2A, 2B) entfernbar ist, wobei der Sperrkörper (1) zumindest abschnittsweise mit magnetisierbarem Material zum Beeinflussen der magnetischen Feldlinien des schwimmend gelagerten Sperrmagneten (3) versehen ist, sodass der Sperrmagnet (3) in der Verriegelungsposition haltbar ist und wobei ein Betätigungselement (4) mit zumindest einem mit dem zugeordneten Sperrmagneten (3) korrespondierenden Betätigungsmagnet (3A) zum Entriegeln des Sperrkörpers (1) vorgesehen ist.

2. Zugangssperre nach Anspruch 1, **dadurch gekennzeichnet, dass** der Sperrkörper (1) zumindest ein Gehäuseelement (6) und zumindest ein Sperrelement (5) umfasst, wobei das Gehäuseelement (6) drehbar auf dem Sperrelement (5) zum Sperren und Entriegeln des Sperrkörpers (1) gelagert ist.

3. Zugangssperre nach Anspruch 2, **dadurch gekennzeichnet, dass** als magnetisierbares Material zumindest ein ferritischer Einsatz (8, 8A, 11) an dem Sperrelement (5) und/oder an dem Gehäuseelement (6) des Sperrkörpers (1) vorgesehen ist.

4. Zugangssperre nach Anspruch 2 oder 3, **dadurch gekennzeichnet, dass** das zylindrische Sperrelement (5) zumindest eine axial ausgerichtete Ausnehmung (9) zum Aufnehmen des axial bewegbaren Sperrmagneten (3) aufweist, und dass jeder Ausnehmung (9) ein korrespondierender Aufnahmebereich (10) für den jeweiligen Sperrmagneten (3) in einem Deckelbereich des Gehäuseelementes (6) zugeordnet ist.

5. Zugangssperre nach Ansprüche 4, **dadurch gekennzeichnet, dass** in der Verriegelungsposition des Sperrmagneten (3) die zugeordnete Ausnehmung (9) des Sperrelements (5) mit dem zugeordneten Aufnahmebereich (10) des Gehäuseelementes (6) deckungsgleich angeordnet ist und der in der Ausnehmung (9) angeordnete Sperrmagnet (3) abschnittsweise in dem zugeordneten Aufnahmebereich (10) zum Sperren der Relativbewegung zwischen dem Gehäuseelement (6) und dem Sperrelement (5) des Sperrkörpers (1) angeordnet ist und dass in der Entriegelungsposition des Sperrmagneten (3) die zugeordnete Ausnehmung (9) des Sperrelements (5) nicht deckungsgleich mit dem zugeordneten Aufnahmebereich (10) angeordnet ist und der Sperrmagnet (3) ausschließlich in der Ausnehmung (9) zum Freigeben der Relativbewegung zwischen dem Gehäuseelement (6) und dem Sperrelement (5) des Sperrkörpers (1) angeordnet ist.

6. Zugangssperre nach einem der Ansprüche 4 oder 5, **dadurch gekennzeichnet, dass** zumindest ein erster ferritischer Einsatz (8) radial außen und/oder zumindest ein erster ferritischer Einsatz (8A) radial innen bezogen auf die axial verlaufenden Ausnehmungen (9) am Außenumfang und/oder am Innenumfang des Sperrelementes (5) vorgesehen ist.

7. Zugangssperre nach einem der Ansprüche 4 bis 6, **dadurch gekennzeichnet, dass** zumindest ein zweiter ferritischer Einsatz (11) radial innen und/oder radial außen bezogen auf die Aufnahmebereiche (10) am Deckelbereich des Gehäuseelementes (6) vorgesehen ist.

8. Zugangssperre nach einem der Ansprüche 4 bis 7, **dadurch gekennzeichnet, dass** der Deckelbereich des Gehäuseelementes (6) eine die Aufnahmebereiche (10) aufweisende Rastscheibe (18) und eine Frontscheibe (7) als Abdeckung sowie eine Kodierkontur (21) zum Drehen des Gehäuseelementes (6) mit dem Betätigungselement (4) zum Sperren und Entriegeln des Sperrkörpers (1) umfasst, wobei die Rastscheibe (18) und die Frontscheibe (7) sowie die Kodierkontur (21) als Deckelbereich drehfest mit dem Gehäuseelement (6) verbunden sind.

9. Zugangssperre nach Anspruch 8, **dadurch gekennzeichnet, dass** das Betätigungselement (4) an einem Ende eine mit der Kodierkontur (21) des Gehäuseelementes (6) korrespondierende Kodierkontur (20) aufweist, wobei dem Ende zumindest ein mit dem Sperrmagnet (3) korrespondierender Betätigungsmagnet (3A) zugeordnet ist, wobei Sperrmagnet (3) und korrespondierender Betätigungsmagnet (3A) mit identischer Polarität einander zugewandt sind, sodass der in der zugeordneten Ausnehmung (9) schwimmend gelagerte Sperrmagnet (3) aufgrund der magnetischen Abstoßungskräfte axial aus dem Aufnahmebereich (10) zum Entriegeln des Sperrkörpers (1) bewegbar ist und nach dem Entfernen des Betätigungselementes (4) wieder in die Verriegelungsposition bewegbar ist.

10. Zugangssperre nach einem der Ansprüche 2 bis 9, **dadurch gekennzeichnet, dass** ein Bodenbereich des Sperrelementes (5) einen Konturaufnahmeabschnitt (14, 14B) zum formschlüssigen Aufnehmen eines Konturabschnittes (19, 19A, 19B) des Elementes (2, 2A, 2B) aufweist, und dass dem Konturaufnahmeabschnitt (14, 14B) des Sperrelementes (5) ein Konturausschnitt (15, 15B) des Gehäuseelementes (6) zugeordnet ist, wobei zum Aufsetzen des Sperrkörpers (1) auf das Element (2, 2A, 2B) der Konturaufnahmeabschnitt (14, 14B) des Sperrelementes (5) deckungsgleich mit dem Konturausschnitt (15, 15B) des Gehäuseelementes (6) ausgerichtet ist, und wobei beim verriegelten Sperrkörper (1) das Gehäuseelement (6) derart verdreht ist, dass der Konturaufnahmeabschnitt (14, 14B) des Sperrelementes (5) nicht deckungsgleich mit dem Konturausschnitt (15, 15B) des Gehäuseelementes (6) ausgerichtet ist und der Rand des Konturausschnittes (15, 15B) des Gehäuseelements (6) zumindest abschnittsweise formschlüssig mit dem Konturabschnittes (19, 19A, 19B) des Elementes (2, 2A, 2B) verbunden ist.

11. Zugangssperre nach einem der vorangehenden Ansprüche, **dadurch gekennzeichnet, dass** als Element ein Schraubenverbindungselement (2) einer Felge eines Fahrzeuges mit einem Mehrkantabschnitt als Konturabschnitt (19) vorgesehen ist, wobei der Konturabschnitt (19) eine Hinterschneidung (17) zum formschlüssigen Verbinden mit dem Sperrkörper (1) aufweist.

12. Zugangssperre nach einem der Ansprüche 1 bis 10, **dadurch gekennzeichnet, dass** als Element ein Verriegelungselement (2A) eines Drehriegelschlosses (27) vorgesehen ist, wobei das von dem Drehriegelschloss (27) vorstehende Verrieglungselement (2A) einen Drehriegelmehrkantabschnitt als Konturabschnitt (19A) aufweist, der von einer Schlossblende (23) des Drehriegelschlosses (27) umgeben ist, wobei der Konturabschnitt (19A) eine Hinterschneidung (17A) zum formschlüssigen Verbinden mit dem Sperrkörper (1) aufweist.

13. Zugangssperre nach einem der Ansprüche 1 bis 10, **dadurch gekennzeichnet, dass** als Element ein Schließzylinderelement (2B) eines Zylinderschlosses (28) vorgesehen ist, wobei das von dem Zylinderschloss (28) vorstehende Schließzylinderelement (2B) einen schließzylinderförmigen Konturabschnitt (19B) aufweist, der von einer Schlossblende (26) des Zylinderschlosses (28) umgeben ist, wobei der Konturabschnitt (19B) eine Hinterschneidung (17B) zum formschlüssigen Verbinden mit dem Sperrkörper (1) aufweist.

14. Betätigungselement (4) mit zumindest einem mit dem zugeordneten Sperrmagneten (3) korrespondierenden Betätigungsmagnet (3A) zum Entriegeln des Sperrkörpers (1) der vorangehenden Zugangssperre.
